# EUROPÄISCHE PATENTSCHRIFT

(11) **EP 0 829 088 B1**
(45) Veröffentlichungstag und Bekanntmachung des Hinweises auf die Patenterteilung: **17.11.1999**
(21) Anmeldenummer: 96914858.4
(22) Anmeldetag: 13.05.1996
(51) Int. Cl.: G21C 19/40, G21F 1/12

(54) **ABSORPTIONSSTRUKTUR ZUR ABSORPTION VON NEUTRONEN SOWIE VERFAHREN ZUR HERSTELLUNG EINER ABSORPTIONSSTRUKTUR**
ABSORPTION STRUCTURE FOR ABSORBING NEUTRONS AND PROCESS FOR PRODUCING IT
STRUCTURE D'ABSORPTION DE NEUTRONS ET PROCEDE DE PRODUCTION D'UNE STRUCTURE D'ABSORPTION

(30) Priorität: 24.05.1995 DE 19519231
(43) Veröffentlichungstag der Anmeldung: 18.03.1998
(73) Patentinhaber: SIEMENS AKTIENGESELLSCHAFT, 80333 München (DE)
(72) Erfinder: RUDNICK, Karl-Heinz, D-63303 Dreieich (DE); TENNIE, Manfred, D-63762 Grossostheim (DE); ZEITZSCHEL, Günter, D-60431 Frankfurt (DE)
(86) Internationale Anmeldenummer: DE9600838
(87) Internationale Veröffentlichungsnummer: WO9637896

(56) Entgegenhaltungen:
- EP-A- 0 003 226
- EP-A- 0 186 487
- DE-A- 2 638 922
- US-A- 3 056 028
- US-A- 4 746 487

## Beschreibung

Die Erfindung betrifft eine Absorptionsstruktur zur Absorption von Neutronen, wie sie beispielsweise von Brennelementen eines Kernreaktors ausgesandt werden, sowie ein Verfahren zur Herstellung einer solchen Absorptionsstruktur.

Zur Erreichung einer gewünschten Neutronenabsorption werden üblicherweise Absorberteile in Form verschiedenartiger Schächte, Kanister oder ähnlicher Konfigurationen hergestellt, die einen Neutronen aussendenden Gegenstand umgeben und ihn dadurch abschirmen. Der Einsatz solcher Absorberteile ermöglicht beispielsweise die kompakte Lagerung Neutronen abgebender Komponenten, insbesondere Brennelemente, aus Kernreaktoren. Aus der EP 0 385 187 A1 ist ein Brennelement-Lagergestell bekannt, bei dem Absorberbleche im montierten Zustand eine Anzahl von Schächten bilden, die die Brennelemente über deren gesamte Länge umschließen. Die aus Absorberblechen oder Absorberteilen gebildeten Schächte weisen ein Neutronen absorbierendes Material, z.B. Borstahl oder borierte Bleche auf.

Die Absorberteile werden üblicherweise dadurch hergestellt, daß ein bestimmter Anteil von beispielsweise etwa 0,8 Gew.-% Bor in ein schmelzflüssiges Grundmetall eingebracht wird. Ein aus dieser Schmelze hergestelltes Absorberteil wird anschließend zu einem Schacht, einem Kanister oder einem sonstigen Behälter weiterverarbeitet. Ein Nachteil dieser Boranreicherung besteht allerdings darin, daß das Grundmaterial durch das Einschmelzen oder Einlagern von Bor oberhalb einer bestimmten Konzentration versprödet, so daß die Weiterverarbeitung äußerst schwierig und in speziellen Anwendungsfällen sogar unmöglich ist.

Eine weitere Möglichkeit zur Herstellung von Absorberteilen besteht darin, das Neutronen absorbierende Material in einen Grundwerkstoff, z.B. aus Aluminium oder aus Kunststoff (Kunststoffmatte), einzulagern, und diesen Grundwerkstoff anschließend auf beiden Seiten mit austenitischen Blechen zu versehen. Hierdurch kann allerdings nicht in jedem Fall gewährleistet werden, daß eine homogene Verteilung des Bors innerhalb des Grundwerkstoffs sichergestellt ist. Die Forderung nach einer homogenen Verteilung des Neutronen absorbierenden Materials innerhalb des Absorberteils ist aus Gründen der Gefahr eines Kritikalitätsstörfalls bei Kernreaktoren zu erfüllen. Darüber hinaus ist ebenfalls zu gewährleisten, daß eine Enthomogenisierung innerhalb des Absorberteils auch im Nachhinein nicht stattfindet.

In der US-PS 4,218,622 ist ein zusammengesetztes Neutronenabsorptionsteil beschrieben, welches eine dünne Trägerfolie oder ein dünnes Trägerblech aufweist, auf das eine Polymermatrix aufgetragen ist, in die Bor-Karbid-Partikel eingelagert sind. Als Material der Trägerfolie bzw. des Trägerblechs wird bevorzugt Glasfaser verwendet. Die Bor-Karbid-Partikel sind gleichmäßig an der Oberfläche der Polymermatrix verteilt und es wird eine Borkonzentration von bis zu 0,1 g/cm² erreicht. Bei einer Verwendung des zusammengesetzten Absorberteils in einem Brennelement-Lagerbecken hat dieses Absorberteil eine Dicke von bis zu 7 mm, ist in Form einer Folie oder eines Bleches ausgestaltet und zwischen einer inneren Wand und einer äußeren Wand aufgehängt. Inwieweit eine homogene Verteilung der an der Oberfläche der Polymermatrix angeordneten Bor-Karbid-Partikel über eine längere Zeit gewährleistet ist, insbesondere im Hinblick auf einen möglichen Abrieb an der Oberfläche, kann der US-PS 4,218,622 nicht entnommen werden. Die Problematik einer homogenen Verteilung von Neutronen absorbierendem Material sowohl in der Fläche als auch im Volumen bleibt auch bei dem in der US-PS 4,218,622 genannten Absorberteil weiterhin bestehen.

Aus der US-PS 3,056,028 ist eine Struktur zur Abschirmung von Neutronenstrahlen bekannt. Diese Struktur umfaßt zwei ebene und parallel zueinander ausgerichtete Platten, zwischen denen eine separate wabenartige Kernstruktur angeordnet ist. In den einzelnen Zellen der wabenartigen Kernstruktur ist ein Neutronen absorbierendes Material eingebracht. Die seitlichen Öffnungen der Kernstruktur sind durch die gegenüberliegenden, ebenen Bleche verschlossen. Das Neutronen absorbierende Material kann daher aus den einzelnen Zellen nicht austreten, und es ist eine weitgehende homogene Verteilung erzielt. Die Struktur mit der wabenartigen Kernstruktur ist fertigungstechnisch allerdings nur aufwendig herzustellen.

Der Erfindung liegt daher die Aufgabe zugrunde, eine einfach herzustellende Absorptionsstruktur anzugeben, mit der unter Vermeidung der dargelegten Nachteile bei einer bestimmungsgemäßen Anwendung eine sichere Abschirmung eines Neutronen aussendenden Gegenstandes mit einem hohen Maß an Absorption im gesamten abzuschirmenden Bereich auch über eine längere Zeitdauer gewährleistet ist. Weiterhin liegt der Erfindung die Aufgabe zugrunde, ein Verfahren zur Herstellung einer entsprechenden Absorptionsstruktur anzugeben.

Die auf eine Absorptionsstruktur bezogene Aufgabe wird erfindungsgemäß dadurch gelöst, daß ein Neutronen absorbierendes Material zwischen einem ersten Blech und einem zweiten Blech angeordnet ist, wobei das erste Blech Stege oder Wölbungen aufweist, an welchen das zweite Blech befestigt ist, so daß zwischen den beiden Blechen eine Mehrzahl von Hohlräumen zur Aufnahme des Neutronen absorbierenden Materials gebildet ist.

Dadurch, daß eines der Bleche Stege oder Wölbungen aufweist, ist eine besonders einfache.Befestigung des zweiten Blechs an diesen Stegen oder Wölbungen, insbesondere durch Löten und Schweißen, möglich. Dies insbesondere deshalb, weil eine genaue Positionierung der Bleche zueinander hierbei nicht erforderlich ist. Ist eine genaue Positionierung der Bleche zueinander gegeben, so kann auch das zweite Blech mit Wölbungen oder Stegen ausgestaltet sein. Die entsprechenden Stege können unmittelbar zueinander benachbart ausgerichtet und miteinander verbunden werden. Hierdurch wird über die Stege eine Beabstandung der Bleche erreicht, so daß die durch die Stege und Wölbungen gebildeten Hohlräume eine vergrößerte Tiefe besitzen. Die Form und Größe einer Querschnittsfläche der Hohlräume kann durch Ausgestaltung der Stege oder Wölbungen vielfach variiert werden, insbesondere kann die Querschnittsfläche rechteckig, beispielsweise quadratisch, rautisch oder wabenförmig, sein. Stege oder Wölbungen können durch Stanz-, Präge- oder Gießverfahren in großindustriellem Maßstab einfach hergestellt werden.

Durch die Mehrzahl von Hohlräumen, insbesondere mit einem definierten kleinen Volumen, ist nach Einbringen des Neutronen absorbierenden Stoffs gewährleistet, daß dieser auch über einen längeren Zeitraum mit einer vorgegebenen Konzentration in einem begrenzten feststehenden Raumbereich vorhanden ist. Eine homogene Verteilung des Neutronen absorbierenden Stoffes in der Absorptionsstruktur ist somit auch über einen längeren Zeitraum gewährleistet. Zudem gestattet der Einschluß des Neutronen absorbierenden Materials in Hohlräumen mit einem definierten Volumen das Einbringen einer hohen Konzentration von Neutronen absorbierendem Material, ohne daß die tragende Eigenschaft im Hinblick auf thermische sowie mechanische Belastungen der Absorptionsstruktur beeinflußt ist. Ein Brennelement-Lagergestell mit einer solchen Absorptionsstruktur gestattet daher bei entsprechender Konzentration des Neutronen absorbierenden Stoffs eine weitaus kompaktere Lagerung von abgebrannten Brennelementen als dies bisher möglich ist. Die Absorptionsstruktur eignet sich aber, insbesondere wegen des weitgehend beliebig einstellbaren Gehalts an Neutronen absorbierendem Material, für eine Vielzahl von Anwendungsgebieten, bei denen eine Abschirmung von Neutronen erforderlich ist. Die mechanische und thermische Stabilität erhält die Absorptionsstruktur durch die Bleche, die aus bekannten und qualifizierten Werkstoffen bestehen können.

Vorzugsweise bilden die Stege oder Wölbungen eine Gitterstruktur, wobei die Bleche auf den sich gegenüberliegenden Seiten der Gitterstruktur mit dieser fest verbunden, insbesondere verlötet oder verschweißt, werden. Die Gitterstruktur kann hierbei aus einem metallischen oder keramischen Werkstoff bestehen und Hohlräume aufspannen, deren Querschnittsfläche ebenfalls in einer großen Formvielfalt herstellbar ist.

Bevorzugt ist das Neutronen absorbierende Material in den Hohlräumen jeweils homogen verteilt. Hierzu kann es in Form eines Pulvers, eines gesinterten Materials, in einer viskosen Konsistenz oder als ein Formkörper, der der Form des Hohlraums angepaßt ist, eingebracht werden. Es kann in kristalliner oder amorpher Form sowie einer Mischung aus beiden vorliegen. Auch kann das eingebrachte Neutronen absorbierende Material in sich unterschiedliche Körnung aufweisen, wodurch die Menge pro Volumeneinheit an Neutronen absorbierendem Material variierbar ist. Durch eine stoffschlüssige Verbindung zwischen den Stegen oder Wölbungen des einen Blechs mit dem anderen Blech ist ein vollständig dichter Hohlraum gebildet, so daß die homogene Verteilung des Neutronen absorbierenden Materials auch über einen langen Zeitraum gewährleistet ist.

Das Neutronen absorbierende Material weist bevorzugtermaßen Bor, Hafnium oder Gadolinium auf. Dieses ist in den Hohlraum mit einem Binder eingebracht. Beispielsweise kann das Bor, Hafnium oder Gadolinium in ein Grundmetall eingeschmolzen, in einen Kunststoff eingelagert oder über einen organischen oder anorganischen Kleber zusammengeklebt worden sein. Die Konzentration des Neutronen absorbierenden Materials in dem Binder beträgt bis zu 80 bis 90 Gew.-%. Hierdurch ist eine Konzentration., beispielsweise des Bors, in der Absorptionsstruktur erreichbar, die deutlich höher liegt als in bisher verwendeten Absorptionsstrukturen. Eine solche Absorptionsstruktur ist daher auch zur Aufnahme und Abschirmung von Neutronen aussendendem Material geeignet, was insbesondere bei der Lagerung von abgebrannten Brennelementen vorteilhaft ist. Bei Verwendung eines Klebers mit organischen Bestandteilen wird beim Verlöten der Bleche erreicht, daß sich die organischen Bestandteile weitestgehend verflüchtigen und somit weitgehend keine Beeinflussung des Absorptionsverhaltens eintritt. Durch Ausfüllen der Hohlräume mit nahezu 100 % an dem Neutronen absorbierenden Material kann seine Konzentration an der Absorptionsstruktur 10 % oder mehr betragen. Dadurch wird eine hohe Absorptionsfähigkeit erreicht.

Eine besonders homogene Verteilung des Neutronen absorbierenden Materials in der Absorptionsstruktur wird durch eine Vielzahl von Hohlräumen erreicht, deren Querschnittsfläche einige Quadratzentimeter beträgt. Die Querschnittsfläche liegt bevorzugt in einem Bereich von 1 bis 100 cm², insbesondere bei etwa 25 cm². Dies entspricht bei einer quadratischen Querschnittsfläche einer Kantenlänge von 10 cm und weniger. Hierdurch ist die Gefahr einer Enthomogenisierung selbst bei einem nicht zu erwartenden Aufreißen eines Hohlraums weitgehend ausgeschlossen, da eine Verschiebung des Neutronen absorbierenden Materials von einem Hohlraum in einen anderen Hohlraum keine wesentliche Veränderung der Verteilung innerhalb der Absorptionsstruktur herbeiführen würde.

Bevorzugt ist aus der Absorptionsstruktur ein Absorptionsbehälter zur Aufnahme eines Brennelements eines Kernreaktors gebildet. Dieser Absorptionsbehälter läßt sich durch die Hohlräume bildenden Bleche einfach und mit der vorgeschriebenen notwendigen mechanischen und thermischen Belastbarkeit herstellen. Als Material für die Bleche eignen sich austenitische Stähle sowie Zirkon oder andere im Kernkraftwerksbau zugelassene Werkstoffe. Bevorzugt wird die Absorptionsstruktur in einem Brennelement-Lagerbecken eines Kernreaktors zur Aufnahme von abgebrannten Brennelementen verwendet. Aufgrund des hohen erreichbaren Anteils an Bor und der gleichzeitig hohen mechanischen und thermischen Stabilität der Absorptionsstruktur eignet sich diese auch für den Einsatz in Trockenlagern für abgebrannte Brennelemente.

Die auf ein Verfahren zur Herstellung einer Absorptionsstruktur gerichtete Aufgabe wird erfindungsgemäß dadurch gelöst, daß zwischen zwei Bleche ein Neutronen absorbierendes Material, insbesondere Bor, Hafnium und/oder Gadolinium, angeordnet wird, wobei das erste Blech Stege, Wölbungen oder eine Gitterstruktur aufweist, an denen/der es mit dem zweiten Belch verlötet wird, so daß das Neutronen absorbierende Material in Hohlräumen eingeschlossen wird. Die Bleche können hierbei so vorbehandelt werden, daß ein Löten ohne weitere Zusatzstoffe in Schutzgasatmosphäre durchführbar ist. Bevorzugt wird zumindest ein Blech mit Stegen oder Wölbungen verwendet, wobei an diese Stege oder Wölbungen das zweite im wesentlichen ebene Blech angelötet wird. Während eines sukzessive fortschreitenden Lötvorgangs können ebenfalls die zwischen den Blechen verbleibenden Hohlräume mit Neutronen absorbierendem Material in vorgegebener Menge gefüllt werden. Die Füllung mit dem Neutronen absorbierenden Material erfolgt beispielsweise mittels eines Binders, der sowohl das Neutronen absorbierende Material zusammenhält als auch eine zumindest vorläufige Bindung mit dem gewölbten Blech oder der Gitterstruktur herstellt. Der Binder kann gegebenenfalls beim Löten fast vollständig entweichen. Durch ein stoff flüssiges Verlöten der durch die Stege oder Wölbungen gebildeten Hohlräume ist ein Verrutschen oder sonstiges Entweichen des Neutronen absorbierenden Materials verhindert, so daß auch langfristig ablaufende Verdichtungsvorgänge nur in einem äußerst begrenzten Maße die Homogenität der Borverteilung innerhalb der Absorptionsstruktur beeinträchtigen.

Anhand der in der Zeichnung dargestellten Ausführungsbeispiele wird die Absorptionsstruktur beispielhaft näher erläutert. Es zeigen:
- Figur 1: eine einen Absorptionsbehälter bildende Absorptionsstruktur in einer räumlichen Darstellung sowie
- Figur 2: eine eine Mehrzahl von Absorptionsschächten bildende Absorptionsstruktur in einer räumlichen Darstellung.

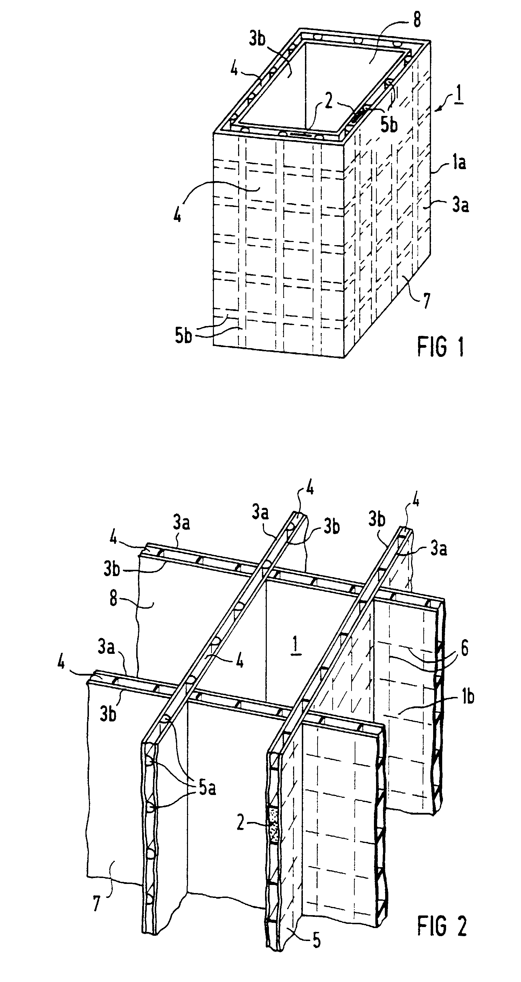

Die in Figur 1 dargestellte Absorptionsstruktur 1 bildet einen Absorptionsbehälter 1a, der insbesondere zur Aufnahme und zum Transport von Neutronen aussendendem Material, wie beispielsweise abgebrannten Brennelementen eines Kernreaktors, geeignet ist. Der Absorptionsbehälter 1a hat einen rechteckigen Querschnitt. Eine äußere Wand 7 des Absorptionsbehälter la wird durch vier erste Bleche 3a gebildet, die jeweils sowohl horizontal als auch vertikal verlaufende eingeprägte Wölbungen 5b aufweisen, welche in das Innere des Absorptionsbehälters 1a gebogen sind. An den Wölbungen 5b sind jeweils zugeordnete zweite Bleche 3b befestigt, die eine innere Wand 8 des Absorptionsbehälters 1a bilden. Zwischen einem jeweiligen ersten Blech 3a und einem zugeordneten zweiten Blech 3b sind durch die vertikal und horizontal verlaufenden Wölbungen 5b Hohlräume 4 gebildet, in denen ein Neutronen absorbierender Stoff 2, insbesondere mit Bor, Hafnium oder Gadolinium, eingebracht ist. Der Neutronen absorbierende Stoff 2 kann dabei als ein gesintertes Material, ein pulverförmiges Material, ein viskoses Material oder ein vollkörper vorliegen. Die Wölbungen 5b können durch Stanzen oder Prägen in dem jeweiligen ersten Blech 3a erzeugt worden sein. Sie können auch beispielsweise auf das erste Blech 3a aufgeschweißt oder gelötet sein. Dadurch, daß der Neutronen absorbierende Stoff 2 zwischen den Blechen lose aber doch ortsfest eingelagert ist, kann für die Bleche jedes zugelassene Material, insbesondere austenitischer Stahl oder Zirkon, mit einer geforderten mechanischen und thermischen Stabilität verwendet werden.

Figur 2 zeigt ebenfalls in räumlicher Darstellung eine Absorptionsstruktur 1, durch die eine Mehrzahl von Absorptionsschächten 1b gebildet ist. Diese Absorptionsschächte 1b dienen bevorzugt der Aufnahme von abgebrannten Brennelementen eines Kernreaktors. Jeder Absorptionsschacht 1b hat eine innere Wand 8 und eine äußere Wand 7, die jeweils durch erste Bleche 3a bzw. zweite Bleche 3b gebildet werden. Aufgrund der räumlichen Anordnung ist dabei bei angrenzenden Absorptionsschächten 1b jeweils die innere Wand 8 des einen Absorptionsschachtes 1b die äußere Wand 7 des angrenzenden Absorptionsschachtes 1b. Figur 2 zeigt analog zu Figur 1 vertikal und horizontal verlaufende Stege 5a zwischen den ersten Blechen 3a und den jeweils zugeordneten zweiten Blechen 3b. Die Stege 5a können dabei durch Prägung oder Stanzen in einem der Bleche 3a, 3b erzeugt worden sein. Zudem zeigt Figur 2 eine Gitterstruktur 6, die zwischen einem ersten Blech 3a und einem zweiten Blech 3b angeordnet ist. Die entsprechenden Bleche 3a und 3b sind mit der Gitterstruktur 6 verlötet bzw. verschweißt, so daß durch die Gitterstruktur 6 und die daran befestigten Bleche 3a, 3b Hohlräume 4 gebildet sind, in die ein Neutronen absorbierender Stoff 2 eingebracht ist. Die Gitterstruktur 6 kann aus dem gleichen, insbesondere metallischen, Material wie die Bleche 3a, 3b gefertigt sein. Es ist ebenfalls möglich, die Gitterstruktur 6 aus einem anderen Material, beispielsweise einem keramischen Material, herzustellen. Die Querschnittsfläche und damit die Form der Hohlräume 4 ist in weiten Grenzen durch die Anordnung und den Verlauf der Stege 5a, Wölbungen 5b bzw. der Gitterstruktur 6 variierbar. Auf alle Fälle ist in den dadurch gebildeten Hohlräumen 4 der Neutronen absorbierende Stoff 2 in beliebiger Konzentration einbringbar, so daß die Absorptionsfähigkeit der Absorptionsstruktur 1 in weiten Grenzen und für die verschiedensten Anwendungen auslegbar ist.

Die Erfindung zeichnet sich durch eine Absorptionsstruktur aus, welche einen Neutronen absorbierenden Stoff enthält, der zwischen einem ersten Blech und einem zweiten Blech eingelagert ist. Die Bleche sind dabei so miteinander verbunden, daß zwischen ihnen eine Mehrzahl von Hohlräumen zur Aufnahme des Neutronen absorbierenden Stoffes gebildet ist, wodurch eine homogene Verteilung des Neutronen absorbierenden Stoffs über die Absorptionsstruktur auch über einen längeren Zeitraum gewährleist ist. Ein Abrieb des Neutronen absorbierendes Stoffs, insbesondere Bor, Hafnium oder Gadolinium, sowie eine Enthomogenisierung ist insbesondere durch das kleine Volumen der Hohlräume praktisch ausgeschlossen. Zumindest eines der Bleche weist Stege oder Wölbungen, die durch Prägung, Stanzen oder Auflöten an diesem hergestellt sind, auf. Hierdurch wird auf einfache Art und Weise durch Anlöten eines weiteren Bleches an diese Stege eine Vielzahl von Hohlräumen gebildet. Für die Bleche kann entsprechend eines gewünschten Anwendungsfalls jedes zugelassene Material, insbesondere ein austenitischer Stahl oder Zirkon, verwendet werden. Hierdurch hat die Absorptionsstruktur eine hohe mechanische und thermische Stabilität, wie sie beispielsweise in Anwendungen auf dem Gebiet der Kerntechnik, insbesondere in Brennelement-Lagerbecken und Brennelement-Trockenlagern, gefordert wird. Das Neutronen absorbierende Material ist in den Hohlräumen in quasi jeder beliebigen Konzentration einlagerbar, so daß auch die Absorptionsfähigkeit der Absorptionsstruktur in weiten Grenzen je nach Anwendungsfall in einfacher Art und Weise einstellbar ist.

## Patentansprüche

1. Absorptionsstruktur (1) zur Absorption von Neutronen mit einem Neutronen absorbierenden Material (2), welches zwischen einem ersten Blech (3a) und einem zweiten Blech (3b) angeordnet ist, wobei das erste Blech (3a) Stege (5a) oder Wölbungen (5b) aufweist, an welchen das zweiten Blech (3b) befestigt ist, so daß zwischen den Blechen (3a, 3b) eine Mehrzahl von Hohlräumen (4) zur Aufnahme des Neutronen absorbierenden Materials (2) gebildet ist.

2. Absorptionsstruktur (1) nach Anspruch 1,
**dadurch gekennzeichnet**, daß die Stege (5a) oder Wölbungen (5b) eine Gitterstruktur (6) aufweisen.

3. Absorptionsstruktur (1) nach Anspruch 1 oder 2,
**dadurch gekennzeichnet**, daß das Neutronen absorbierende Material (2) in den Hohlräumen (4) jeweils homogen verteilt ist.

4. Absorptionsstruktur (1) nach einem der vorhergehenden Ansprüche,
**dadurch gekennzeichnet**, daß das Neutronen absorbierende Material (2) in Form eines Pulvers, in gesinterter Form, in viskoser Form oder als den jeweiligen Hohlraum (4) ausfüllender Formkörper eingebracht ist.

5. Absorptionsstruktur (1) nach einem der vorhergehenden Ansprüche,
**dadurch gekennzeichnet**, daß das Neutronen absorbierende Material (2) Bor, Hafnium und/oder Gadolinium aufweist.

6. Absorptionsstruktur (1) nach Anspruch 5,
**dadurch gekennzeichnet**, daß das Neutronen absorbierende Material (2) in einem Gemisch mit einem Binder eingebracht ist, wobei der Anteil des Neutronen absorbierenden Materials (2) in dem Gemisch bis zu 90 Gew.-% beträgt.

7. Absorptionsstruktur (1) nach einem der vorhergehenden Ansprüche,
**dadurch gekennzeichnet**, daß einer der Hohlräume (4) eine Querschnittsfläche (7) von 1 bis 100 cm², insbesondere 25 cm² hat.

8. Absorptionsstruktur (1) nach einem der vorhergehenden Ansprüche, die einen Absorptionsbehälter (8) zur Aufnahme eines Brennelementes eines Kernreaktors bildet.

9. Absorptionsstruktur (1) nach einem der vorhergehenden Ansprüche, angeordnet in einem Brennelement-Lagerbecken eines Kernreaktors.

10. Verfahren zur Herstellung einer Absorptionsstruktur (1), **dadurch gekennzeichnet**, daß zwischen zwei Bleche (3a, 3b) ein Neutronen absorbierendes Material (2) angeordnet wird, wobei das erste Blech (3a) Stege (5a), Wölbungen (5b) oder eine Gitterstruktur (6) aufweist, an denen/der es mit dem zweiten Belch (3b) verlötet wird, so daß das Neutronen absorbierende Material (2) in Hohlräumen (4) eingeschlossen wird.

## Claims

1. Absorption structure (1) for the absorption of neutrons, with a material (2) which absorbs neutrons, which material is arranged between a first plate (3a) and a second plate (3b), wherein the first plate (3a) has bars (5a) or curvatures (5b) to which the second plate (3b) is secured, so that between the plates (3a, 3b) a plurality of cavities (4) for receiving the material (2) which absorbs neutrons is formed.

2. Absorption structure (1) according to claim 1, characterized in that the bars (5a) or curvatures (5b) have a lattice-like structure (6).

3. Absorption structure (1) according to claim 1 or 2, characterized in that the material (2) which absorbs neutrons is in each case homogeneously distributed in the cavities (4).

4. Absorption structure (1) according to one of the preceding claims, characterized in that the material (2) which absorbs neutrons is introduced in the form of a powder, in sintered form, in viscous form or as a shaped body which fills the respective cavity (4).

5. Absorption structure (1) according to one of the preceding claims, characterized in that the material (2) which absorbs neutrons has boron, hafnium and/or gadolinium.

6. Absorption structure (1) according to claim 5, characterized in that the material (2) which absorbs neutrons is introduced in a mixture with a binder, wherein the portion of the material (2) which absorbs neutrons amounts to up to 90% by weight in the mixture.

7. Absorption structure (1) according to one of the preceding claims, characterized in that one of the cavities (4) has a cross-sectional area (7) of 1 to 100 cm², in particular 25 cm².

8. Absorption structure (1) according to one of the preceding claims, which forms an absorption container (8) for receiving a fuel element of a nuclear reactor.

9. Absorption structure (1) according to one of the preceding claims, arranged in a fuel element storage tank of a nuclear reactor.

10. Method for manufacturing an absorption structure (1), characterized in that between two plates (3a, 3b) a material (2) which absorbs neutrons is arranged, wherein the first plate (3a) has bars (5a), curvatures (5b) or a lattice-like structure (6), to which it is soldered with the second plate (3b), so that the material (2) which absorbs neutrons is enclosed in cavities (4).

## Revendications

1. Structure (1) d'absorption de neutrons par une matière (2) absorbant les neutrons, qui est interposée entre une première tôle (3a) et une seconde tôle (3b), la première tôle (3a) comportant des nervures (5a) ou des parties bombées (5b) sur lesquelles la seconde tôle (3b) est fixée, de manière à former entre les tôles (3a, 3b) une pluralité de cavités (4) de réception de la matière (2) absorbant les neutrons.

2. Structure (1) d'absorption suivant la revendication 1, caractérisée en ce que des nervures (5a) ou les parties bombées (5b), présentent une structure (6) en réseau.

3. Structure (1) d'absorption suivant la revendication 1 ou 2, caractérisée en ce que la matière (2) absorbant les neutrons est répartie de manière homogène dans les cavités (4).

4. Structure (1) d'absorption suivant l'une des revendications précédentes, caractérisée en ce que la matière (2) absorbant les neutrons est insérée sous la forme d'une poudre, sous forme frittée, sous forme visqueuse ou sous forme d'une pièce moulée remplissant la cavité (4).

5. Structure (1) d'absorption suivant l'une des revendications précédentes, caractérisée en ce que la matière (2) absorbant les neutrons comprend du bore, de l'hafnium et/ou du gadolinium.

6. Structure (1) d'absorption suivant le revendication 5, caractérisée en ce que la matière (2) absorbant les neutrons est introduite en un mélange avec un liant, la proportion de la matière (2) absorbant les neutrons représentant jusqu'à 90 % en poids du mélange.

7. Structure (1) d'absorption suivant l'une des revendications précédentes, caractérisée en ce que l'une des cavités (4) a une surface (7) de section transversale de 1 à 100 cm², notamment de 25 cm².

8. Structure (1) d'absorption suivant l'une des revendications précédentes, qui forme une cuve (8) d'absorption destinée à la réception d'un assemblage combustible d'un réacteur nucléaire.

9. Structure (1) d'absorption suivant l'une des revendications précédentes, disposée dans un bassin de stockage d'assemblages combustibles d'un réacteur nucléaire.

10. Procédé de fabrication d'une structure (1) d'absorption, caractérisé en ce qu'il consiste à disposer entre deux tôles (3a, 3b) une matière (2) absorbant les neutrons, la première tôle (3a) comportant des nervures (5a), des parties bombées (5b) ou une structure (6) en réseau, sur laquelle ou sur lesquelles elle est brasée à la seconde tôle (3b), de manière à enfermer la matière (2) absorbant les neutrons dans des cavités (4).
